**Europäisches Patentamt**

**European Patent Office**

**Office européen des brevets**

(19)

(11)  **EP 1 260 885 A2**

(12)  **EUROPÄISCHE PATENTANMELDUNG**

(43) Veröffentlichungstag:
**27.11.2002  Patentblatt 2002/48**

(51) Int Cl.⁷: **G05B 9/03**

(21) Anmeldenummer: **02010761.1**

(22) Anmeldetag: **14.05.2002**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **25.05.2001  DE 10125650**

(71) Anmelder: **SIEMENS AKTIENGESELLSCHAFT
80333 München (DE)**

(72) Erfinder: **Baumann, Erich
89438 Holzheim (DE)**

(54)  **Steuer- oder Regelverfahren**

(57)      Die Erfindung betrifft ein Steuer- oder Regelverfahren, bei dem ein von einem Sensor gelieferter Messwert (MW) mit einer in einem logischen Baustein 1 hinterlegten ersten Rechenoperation in einen ersten Ausgangswert (AW) umgewandelt wird. Zur Erkennung von Hardwarefehlern wird mit einer diversitären zweiten Rechenoperation ein zweiter Ausgangswert berechnet und ein Vergleich der beiden Ausgangswerte durchgeführt. Im Falle einer Ungleichheit der beiden Werte wird ein Signal erzeugt.

EP 1 260 885 A2

**Beschreibung**

Die Erfindung betrifft ein Steuer- oder Regelverfahren bei dem ein von einem Sensor, beispielsweise einem Temperaturoder Drucksensor gelieferter Messwert mit Hilfe einer in einem logischen Baustein hinterlegten Rechenoperation in einen normierten Ausgangswert umgewandelt wird. Bei dieser Umwandlung wird einem Dezimalwert des Sensorausgangssignals, beispielsweise einem Spannungswert, durch eine Rechenoperation ein physikalischer Wert, etwa ein Druck- oder Temperaturwert zugeordnet. Die durchgeführte Rechenoperation kann nun aufgrund von Hardwarefehlern und dementsprechend aufgrund fehlerhafter Bits zu einem falschen Ergebnis führen. Die Ausgabe von Fehlermeldungen oder das Abschalten eines mit dem Steueroder Regelverfahren überwachten Systems, beispielsweise eines Notstromaggregates für Kernkraftwerke können die Folge sein.

Davon ausgehend ist es die Aufgabe der Erfindung, ein Steuerund Regelverfahren vorzuschlagen, mit dem sich auf die Normierung eines Messwertes auswirkende Hardwarefehler erkannt werden können.

Diese Aufgabe wird nach Anspruch 1 dadurch gelöst, dass mit einer zweiten, diversitären Rechenoperation ein zweiter Ausgangswert berechnet, ein Vergleich der beiden Ausgangswerte durchgeführt und im Falle einer Ungleichheit ein Signal erzeugt wird. Ein Hardwarefehler kann dadurch sofort erkannt und entsprechende Maßnahmen eingeleitet, beispielsweise im Falle eines mehrkanaligen Aggregateschutzes der den Hardwarefehler aufweisende Kanal gesperrt werden.

Weitere vorteilhafte Ausgestaltungen sind in den Unteransprüchen angegeben.

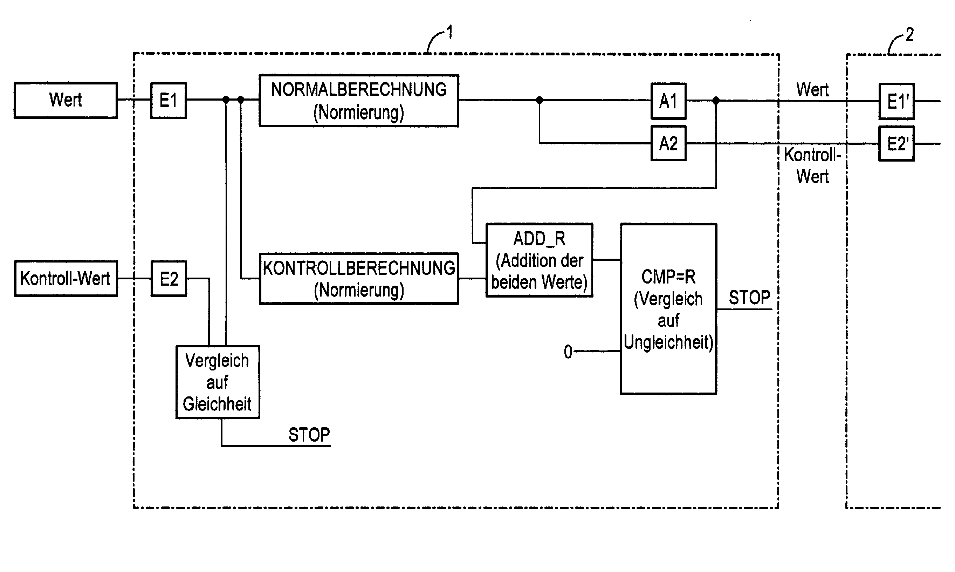

Die Erfindung wird nun anhand eines in der beigefügten Zeichnung dargestellten Ausführungsbeispiels näher erläutert.

In der Abbildung sind von einer Steuerungs- oder Regelungseinrichtung nur zwei beispielsweise in einer CPU realisierte logische Bausteine, nämlich ein Normierungsbaustein 1 und ein diesem nachgeschalteter Auslösebaustein 2 dargestellt. Die Einrichtung ist beispielsweise Teil des Aggregateschutzes eines Notstromdiesels für ein Kernkraftwerk. Die im Normierungsbaustein 1 durchgeführten Operationen und logischen Verknüpfungen sind nach Art eines Blockschaltbildes bzw. Signalflussplans dargestellt. Bei einer solchen Schutzeinrichtung werden sicherheitsrelevante Parameter des Dieselaggregates, beispielsweise die Öltemperatur und der Öldruck mit Hilfe von Sensoren überwacht. Die Sensoren liefern einen Wert, der über einen Eingang E1 in den Normierungsbaustein 1 eingelesen und gespeichert wird. Zusätzlich wird ein Kontrollwert über einen zweiten Eingang E2 eingelesen. Die identischen, jedoch an unterschiedlichen Stellen gespeicherten Werte werden auf Gleichheit verglichen. Bei einer Abweichung wird ein Stoppsignal erzeugt, d.h. der dem Sensor zugeordnete Kanal wird gesperrt. Die Überwachung wird dann von dem noch funktionsfähigem Sensor bzw. Kanal Schutzkreis übernommen. Aus Sicherheitsgründen erfolgt die Überwachung bei solchen Dieselaggregaten mindestens zweikanalig.

Der über E1 eingelesene Messwert wird einer ersten Rechenoperation (in der Abbildung mit Normalberechnung bezeichnet) unterzogen, um den vom Sensor gelieferten Wert zu normieren, d.h. dem Dezimalwert des Sensorsignals wird ein Druckwert zugeordnet. Der normierte Wert wird über die Ausgänge A1 und A2 aus dem Baustein 1 aus- und über die Eingänge E1' und E2' beispielsweise in den Auslösebaustein 2 eingelesen. Auch bezüglich des normierten Wertes erfolgt ein Vergleich der oben erwähnten Art.

Neben der oben erwähnten ersten Rechenoperation (Normalberechnung) wird eine zweite Rechenoperation (Kontrollberechnung) mit einem von der ersten Rechenoperation abweichenden Algorithmus durchgeführt. Mit Hilfe dieser diversitären Rechenoperation können Hardwarefehler aufgedeckt werden. Diese können bei der Berechnung zu falschen Ergebnissen führen und würden bei nur einer einzigen Normierungsberechnung unerkannt bleiben und falschen Fehlermeldungen sowie zu fehlerhaften Schutzauslösungen führen. Wird jedoch, wie erfindungsgemäß vorgeschlagen, eine zweite Rechenoperation mit unterschiedlichem Rechenweg durchgeführt, ist dies verhindert. Vorzugsweise wird bei der zweiten Rechenoperation im wesentlichen der gleiche Algorithmus verwendet, wobei jedoch sämtliche zur Berechnung verwendeten Werte in negierter Form bzw. in Form ihres Zweierkomplements verwendet werden. Bei Nichtvorliegen eines Hardwarefehlers wird ein der ersten Rechenoperation entsprechendes Ergebnis erhalten, allerdings mit umgekehrtem Vorzeichen. Die beiden auf diese Weise ermittelten Werte werden addiert. Das Ergebnis der Addition wird in einer Vergleichseinheit (CMP) mit dem Wert 0 verglichen. Bei Gleichheit läuft die Steuerung weiter, bei Ungleichheit wird ein Stoppsignal generiert und die Steuerung bzw. der einem Sensor zugeordnete Schutzkreis unterbrochen.

Die beiden Rechenoperationen werden nun anhand der Umrechnung eines Messwertes in einen Druck-Ausgangswert näher erläutert. Ein Drucksensor liefert einen Stromwert (4 bis 20 mA), der in einen Dezimalwert umgesetzt wird. Dieser Messwert MW wird in einen Druckwert mit der folgenden Formel umgerechnet:

$$AW = \left[ (MW - WBUG) \cdot \frac{OG - UG}{WBOG - WBUG} + UG \right]$$

In dieser Formel bedeutet:

MW =        Messwert (Dezimalwert)
AW =        Ausgangswert
UG =        unterer Grenzwert des Messbereichs
OG =        oberer Grenzwert des Messbereichs
WBUG =      unterer Grenzwert des Grenzwertebereichs
WBOG =      oberer Grenzwert des Grenzwertebereichs

Bei der zweiten Rechenoperation wird der gleiche Algorithmus verwendet, allerdings werden die negierten Werte bzw. die Zweierkomplemente der Werte eingesetzt. Wenn der Rechenoperation gemäß der oben angegebenen Formel keine weiteren zusätzlichen Rechenoperationen hinzugeführt werden, lassen sich Hardwarefehler aufdecken, die einen Bitfehler eines Zahlenwertes bewirken. Es sind aber auch Hardwarefehler möglich, die sich in Form eines falschen Rechenschrittes auswirken. Beispielsweise wird statt einer vorgesehenen Multiplikation eine Division durchgeführt. Um einen solchen Fehler aufzudecken, wird die zweite Rechenoperation um wenigstens eine weitere Rechenoperation erweitert, wobei diese von einem Element und seinem Inversen gebildet ist. Etwa beispielsweise gemäß der nachfolgenden Formel:

$$AW_{neg} = [\ (WBUG + (-MW)) \cdot \frac{1000 \cdot (UG - OG)}{WBUG - WBOG} - 100 \cdot (UG + 15 - 15)\ ]\ /1000$$

Durch die Addition und gleichzeitige Subtraktion einer Zahl, beispielsweise der Zahl 15 wird überprüft, ob Additionen und Subtraktionen korrekt durchgeführt werden. Für den Fall der Multiplikation und Division wird dies durch das Element-Paar x1000/1000 überprüft.

**Patentansprüche**

1.   Steuer- oder Regelverfahren, bei dem ein von einem Sensor gelieferter Messwert (MW) mit einer in einem logischen Baustein 1 hinterlegten ersten Rechenoperation in einen ersten Ausgangswert (AW) umgewandelt wird, **dadurch gekennzeichnet, dass** mit einer diversitären zweiten Rechenoperation ein zweiter Ausgangswert ($AW_{neg}$) berechnet, ein Vergleich der beiden Ausgangswerte (AW, $AW_{neg}$) durchgeführt und im Falle einer Ungleichheit ein Signal erzeugt wird.

2.   Verfahren nach Anspruch 1, **dadurch gekennzeichnet, dass** sich die zweite Rechenoperation von der ersten Rechenoperation durch die Verwendung von negierten Werten unterscheidet.

3.   Verfahren nach Anspruch 1 oder 2, **dadurch gekennzeichnet, dass** die zweite Rechenoperation wenigstens eine zusätzliche aus einem Element und seinem Inversen gebildeten Rechenoperation umfasst.

4.   Verfahren nach einem der vorhergehenden Ansprüche, **dadurch gekennzeichnet, dass** es für die Schutzeinrichtung eines Notstromdieselaggregats eines Kernkraftwerks verwendet wird.

Wert

| E1 |

NORMALBERECHNUNG
(Normierung)

| A1 |

Wert

| E1' |

| A2 |

Kontroll-
Wert

| E2' |

Kontroll-Wert

| E2 |

KONTROLLBERECHNUNG
(Normierung)

ADD_R
(Addition der
beiden Werte)

CMP=R
(Vergleich
auf
Ungleichheit)

STOP

0

Vergleich
auf
Gleichheit

STOP

1

2

EP 1 260 885 A2